# EUROPÄISCHE PATENTSCHRIFT

(11) **EP 2 010 461 B1**
(45) Veröffentlichungstag und Bekanntmachung des Hinweises auf die Patenterteilung: **22.09.2010**
(21) Anmeldenummer: 07724478.8
(22) Anmeldetag: 23.04.2007
(51) Int. Cl.: C04B 12/04, C04B 35/16, C09K 8/56, C09K 8/57, B09C 1/00

(54) **ÖL-, HEISSWASSER- UND TEMPERATURRESISTENTE BINDEMITTEL, VERFAHREN ZU DEREN HERSTELLUNG UND DEREN VERWENDUNG**
OIL-, HOT WATER- AND HEAT-RESISTANT BINDERS, PROCESS FOR PREPARING THEM AND THEIR USE
LIANTS RÉSISTANTS AUX HUILES, À L'EAU DE CHAUFFAGE ET AUX TEMPÉRATURES, LEUR PROCÉDÉ DE FABRICATION ET LEUR UTILISATION

(30) Priorität: 24.04.2006 DE 102006018938
(43) Veröffentlichungstag der Anmeldung: 07.01.2009
(73) Patentinhaber: EPG (Engineered nanoProducts Germany) AG, 66482 Zweibrücken (DE)
(72) Erfinder: AKARSU, Murat, Tucson, AZ 85750 (US); SCHMIDT, Helmut, 66130 Saarbrücken-Güdingen (DE)
(74) Vertreter: Barz, Peter
(86) Internationale Anmeldenummer: PCT/EP2007/003548
(87) Internationale Veröffentlichungsnummer: WO 2007/121972

(56) Entgegenhaltungen:
- FR-A1- 2 561 553
- US-A- 5 415 688

## Beschreibung

Die Erfindung betrifft ein Verfahren zur Herstellung eines Bindemittels, das daraus erhältliche Bindemittel, dessen Verwendung und die damit hergestellten gehärteten Formkörper.

Sol-Gel-Prozesse beruhen in der Regel auf der Hydrolyse und Kondensation von Alkoxiden, in aller Regel in Verbindung mit Silanen. Diese Prozesse sind seit langem bekannt. Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben. Eine Vielzahl von Zusammensetzungen sind untersucht worden. Orthokieselsäureester sind z.B. schon seit über 50 Jahren als Bindemittel für feuerfeste Erzeugnisse eingesetzt worden. Schon 1939 haben Schröder und Geffcken Patente zur Beschichtung von Gläsern über Sol-Gel-Prozesse angemeldet. Im Laufe der Jahrzehnte wurden viele technische Anwendungen von Sol-Gel-Prozessen bekannt, die sich in aller Regel auf Anwendungen in Form von dünnen Schichten konzentrierten. Im Wesentlichen aufbauend auf den Pionierarbeiten von Schmidt und Mitarbeitern wurden so genannte hybride Materialien entwickelt, bei denen Organoalkoxysilane zusammen mit Alkoxiden anderer Elemente kondensiert wurden, die so genannte anorganisch-organische Hybridmaterialien ergaben, wie z. B. Ormosile, Ormocere, Ceramere oder Polycerams.

Typisch für diese Verbindungen ist, dass sie als Verbindungsglied zur Organik die oben erwähnten Organoalkoxysilane nutzen, da Silizium praktisch das einzige anorganische Element darstellt, das über eine bei Umgebungsbedingungen stabile Silizium-Kohlenstoff-Bindung verfügt. Durch die Funktionalisierung der Bindung können beliebige organische Funktionen an das Silizium geknüpft werden. Durch die hydrolysierbaren Reste des Alkoxysilans lassen sich über Hydrolyse und Kondensation anorganische Netzwerke aufbauen. Über die Variationen des organischen Restes lassen sich praktisch alle Funktionen, die aus der organischen Chemie bekannt sind, in die Kondensate einführen.

Es gibt in der Literatur unzählige Publikationen über diesen Typ von Hybridmaterialien. Ormocere haben auch bereits in großem Umfang industrielle Bedeutung für Beschichtungswerkstoffe gefunden, z. B. als Hartschichten und Korrosionsschutzschichten. Ein intrinsischer Nachteil dieser Werkstoffe besteht in der Silizium-Sauerstoff-Silizium-Bindung. Sie ist aufgrund ihrer Natur empfindlich gegen Basen. Mit solchen Systemen lassen sich daher praktisch keine laugenbeständigen Beschichtungen herstellen. Wie eigene Untersuchungen gezeigt haben, sind solche Systeme ebenso empfindlich gegen Wasser bei erhöhtem Druck und erhöhter Temperatur, ganz besonders unter hydrothermalen Bedingungen.

Wie aus der Literatur hinreichend bekannt ist, lässt sich durch die Verwendung von polymerisierbaren funktionellen Gruppen am Silizium ein zweites Netzwerk in Form einer polymeren Kette einbauen, wenn die polymerisierbaren organischen Gruppen miteinander verknüpft werden. Zusätzlich können auch organische Monomere hinzu gegeben werden, die dann zu längeren organischen polymeren Ketten führen. Solche hybriden Werkstoffe bezeichnet man als so genannte IPN-Polymere (inter penetrierende polymere Netzwerke), siehe z.B. Römpp Chemie Lexikon, 9. Auflage, S. 2007. Die sich gegenseitig durchdringenden Netzwerke können miteinander kovalent verknüpft sein oder nicht. Im letzteren Fall liegt eine physikalische Mischung vor. In solchen Materialien können verschiedene Härtungsmechanismen existieren: einmal die anorganische Kondensation, bei der Silizium-Sauerstoff-Sitizium-Bindungen aufgebaut werden, und zum anderen die organische Verknüpfung, bei der organische Polymerketten entstehen. Werden mehrfachfunktionelle Monomere benutzt, so lassen sich auch dreidimensionale organische Netzwerke aufbauen.

Durch die organischen Polymerketten lassen sich die mechanischen Eigenschaften der Materialien verändern. Während die reinen anorganischen Bindungen zu spröden Materialien führen, die zur Verdichtung Temperaturen oberhalb des Transformationspunktes (bei Gläsern) oder oberhalb der Kristallisationstemperatur (bei keramischen Werkstoffen) benötigen, lassen sich Hybridmaterialien in der Regel schon bei sehr niedrigen Temperaturen zwischen 60 und 150°C verdichten. Während die anorganischen Werkstoffe gegen organische Lösungsmittel oder Öle sehr beständig sind, neigen Materialien, die auf organischen Polymerketten aufbauen, zum Quellen oder es kann eine komplette Auflösung erfolgen, besonders bei höheren Temperaturen. Umgekehrt gibt es viele organische Polymere, die sehr laugenbeständig sind. Dies bedeutet, dass man durch den Einbau solcher Polymere in die silicatischen Netzwerke eine Verbesserung der Laugenbeständigkeit erreichen kann. Die grundsätzliche Auflösung des silicatischen Netzwerkes durch Laugenangriff oder hydrothermalen Angriff lässt sich jedoch nicht vermeiden. Die Silizium-Sauerstoff-Silizium-Bindung ist darüber hinaus reversibel. Während sie durch Kondensation aus SiOH-Gruppen unter Wasserabspaltung gebildet werden kann, kann sie besonders bei hohen Wasserdampfpartialdrücken und hohen Temperaturen relativ rasch wieder zu SiOH-Gruppen unter Spaltung der Bindung zurückreagieren.

Bei den oben beschriebenen Eigenschaften neigen derartige Hybridmaterialien unter den hydrothermalen Bedingungen zur raschen Zersetzung, insbesondere dann wenn noch organische Lösungsmittel vorhanden sind. So haben z. B. eigene Untersuchungen in Autoklaven unter simulierten Bedingungen, die z. B. denen in einer Wassertiefe von 1000 m entsprechen, an prinzipiell ähnlich aufgebauten Bindemitteln, wie sie in US-B-6513592 von PDVSA zur Fixierung von sandhaltigen Lagerstätten in erdölhaltigen Formationen vorgeschlagen wurden, ergeben, dass sandhaltige Formkörper, die mit solchen Bindemitteln zu kompakten Körpern gebunden worden sind, sich unter diesen Bedingungen im Autoklaven sehr schnell komplett auflösen. Besonders rasch erfolgt der Auflösungsprozess, wenn eine Mischung aus Erdöl und salzhaltigem Wasser verwendet wird. Das kann so interpretiert werden, dass das heiße Wasser und der hohe Druck die silicatische Bindung zerstören und das rohe Erdöl, das sehr viele unterschiedliche, auch aggressive Verbindungen enthält, die organischen Gruppen angreift beziehungsweise auflöst. Derartige Bindemittel sind für die Verfestigung von losen Formationen, Sanden oder Gesteinen, wie es bei der Erdölförderung von höchster Wichtigkeit ist, nicht geeignet.

Die in DE-A-19647368 und DE-A-102004004615 für diese Anwendung genannten Bindemittel zeigen zwar eine verbesserte Beständigkeit, zersetzen sich jedoch prinzipiell ebenfalls unter Autoklav-Bedingungen von z. B. 70°C bei 70 bar.

In der Patentanmeldung DE 102005002806.3 wird ein Verfahren zur Herstellung von konsolidierten Proppants beschrieben, bei dem als Konsolidierungsmittel ein Hydrolysat oder Kondensat aus einem Organosilan, einem hydrolysierbaren Silan und einer Metallverbindung verwendet wird. Diese zeigen eine deutlich verbesserte Hydrolyse- und Korrosionsstabilität unter Hydrothermalbedingungen, eine weitere Verbesserung der Stabilität unter den genannten Hydrothermalbedingungen ist aber wünschenswert und für eine Anwendung gemäß DE 102005002806.3 in verschiedenen Fällen Voraussetzung.

Es ist in der Literatur bekannt, dass Gläser durch den Einbau von Elementen der dritten und vierten Hauptgruppe an Hydrolysestabilität gewinnen. Solche Elemente sind zum Beispiel Aluminium, Zirconium oder Titan. Auch Bor wirkt in diese Richtung, ebenso wie einige zwei- oder dreiwertige Elemente, wie z. B. Eisen, Calcium oder Blei. Von Titan ist bekannt, dass sich eine besonders gute Wirkung zeigt, wenn Titan als so genannter Netzwerkbildner in die Glasstruktur eingebaut ist.

Der Versuch, Titan über die übliche Hydrolyse und Kondensation homogen bzw. in molekularer Dispersion in Hybridstrukturen einzubauen, lässt sich aber wegen der sehr unterschiedlichen Reaktionsgeschwindigkeiten von Titanalkoxiden und Organoalkoxysilanen praktisch nicht realisieren. Bei der Zugabe von Wasser entstehen nanopartikuläre, zum Teil schon kristalline Partikel, die in der Matrix (auch gleichmäßig) verteilt sein können, jedoch nicht molekular oder oligomer in das Netzwerk integriert sind. Damit wird der Effekt der Laugenstabilität nicht erreicht, weil der Anteil an Si-O-Ti-Gruppen niedrig bleibt. Demgemäß wurden solche Hybridmaterialien, die zumindest teilweise Nanokomposite darstellen, auch im Autoklavenversuch weitgehend abgebaut und zeigen für das stabile Binden von sandhaltigen Formationen unter solchen Bedingungen nur geringe Wirkung.

Die Aufgabe bestand nun darin, Bindemittel bereitzustellen, die unter den oben genannten Bedingungen absolut stabil sind und keine Abbauerscheinungen zeigen. Die erfindungsgemäße Aufgabe konnte überraschenderweise dadurch gelöst werden, dass die metall- oder borhaltige Komponente in entsprechendes Sol oder entsprechende Lösung sofort nach der Hydrolyse der Siliziumverbindungen und dem damit einhergehenden Verbrauch des molekularen Wassers zugefügt wird, bevor die hydrolysierten Siliziumverbindungen anfangen, unter sich zu kondensieren und damit wieder molekulares Wasser in einer Menge produziert haben, um TiO₂ oder ein entsprechendes anderes Metalloxid auszufällen. Die reaktiven Gruppen der metall- oder borhaltigen Komponente werden mit entstandenen Hydroxygruppen der Siliziumverbindungen ohne Hydrolyse der metall- oder borhaltigen Komponente reagieren. Dadurch wird die homogene, d.h. niedermolekulare oder molekulardisperse Verteilung der metall- oder borhaltigen Komponenten in dem Sol oder in der Lösung ermöglicht bzw. die Bildung der nanopartikulären Metall- oder Boroxide, wie TiO₂, nach der Zugabe von Wasser verhindert oder auf niedrigstem Niveau gehalten. Der Nachweis der Wirksamkeit des erfindungsgemäßen Verfahrens ergibt sich aus dem Umstand, dass nach diesem Schritt selbst die Zugabe eines hohen Überschusses an Wasser, z.B. die 3- bis 4-fache stöchiometrische Menge, zu keinerlei Ausfällung oder Bildung von kristallinen Produkten oder Partikeln führt. Dies konnte bei den unten aufgeführten erfindungsgemäßen Beispielen z.B. durch PCS belegt werden.

Dementsprechend betrifft die Erfindung ein Verfahren zur Herstellung eines Bindemittels umfassend ein Heterokondensat aus Siliziumverbindungen und Metall- oder Borverbindungen, bei dem A) mindestens eine hydrolysierbare Siliziumverbindung mit einer nicht hydrolysierbaren polymerisierbaren Gruppe als Si-Komponente mit Wasser unter Bildung eines Hydrolyseprodukts vermischt wird und dann B) mindestens eine Metall- oder Borverbindung, wobei das Metall ausgewählt ist aus Al, Ga, In, Ti, Ge, Ga, Sn, Pb, Ti, Zr, Hf, Sc, Y und La, zum Hydrolyseprodukt zu einem Zeitpunkt zugegeben wird, der innerhalb von 15 s bis 15 min nach der Vermischung der hydrolysierbaren Siliziumverbindungen mit dem Wasser liegt.

Zur Herstellung des metall- oder borhaltigen Bindemittels werden mindestens eine Siliziumverbindung und mindestens eine metall- oder borhaltige, bevorzugt eine titanhaltige Komponente verwendet. In einer bevorzugten Ausführungsform kann auch eine organische Matrix, die über Polymerisationsreaktionen mit der anorganischen Matrix aus Siliziumverbindung und metall- oder borhaltiger Komponente verknüpft werden kann, in das Bindemittel zugefügt werden. Es ergeben sich nach dem erfindungsgemäßen Verfahren überraschenderweise homogene metall- oder borhaltige Bindemittel, die bei der Verwendung zur Herstellung eines Formkörpers die Korrosionsresistenz des erhaltenen Formkörpers deutlich verbessern. Zusätzlich kann die Druckfestigkeit der mit dem Bindemittel gebildeten Formkörper in einer weiteren bevorzugten Ausführungsform durch Verwendung langkettiger Siliziumverbindungen, wie z. B. Poly(alkoxysilane) oder Polyalkylsiloxane, mit reaktiven Endgruppen, verbessert werden, wobei sich die Elastizität des Formkörpers durch Bildung eines langkettigen anorganischen Netzwerks ergibt.

Bei dem erfindungsgemäßen Verfahren wird ein Heterokondensat aus Siliziumverbindungen und Metall- oder Borverbindungen gebildet. Als Si-Komponente wird mindestens eine hydrolysierbare Siliziumverbindung mit einer nicht hydrolysierbaren organischen polymerisierbaren Gruppe verwendet. Es können auch zwei oder mehr dieser Verbindungen zusammen verwendet werden. Die polymerisierbare organische Gruppe kann jede übliche, dem Fachmann bekannte Gruppe sein, die mit sich selbst oder einer oder mehreren anderen korrespondierenden polymerisierbaren Gruppen eine Polymerisation eingehen kann. Polymerisation schließt hier in der Beschreibung ganz allgemein Polykondensation und Polyaddition ein.

Bei der mindestens einen hydrolysierbaren Siliziumverbindung mit einer nicht hydrolysierbaren organischen polymerisierbaren Gruppe handelt es sich z.B. um eine Verbindung der allgemeinen Formel (I)

(Rx)_{b}R_{c}SiX_{4-b-c} (I)

worin die Reste Rx gleich oder verschieden sind und hydrolytisch nicht abspaltbare Gruppen darstellen, die mindestens eine polymerisierbare Gruppe umfassen, die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen, b den Wert 1, 2 oder 3 hat und c den Wert 0, 1 oder 2 hat, wobei die Summe (b+c) 1, 2 oder 3 ist. In der Formel (I) ist b bevorzugt 1 und c bevorzugt 0, so dass das polymeriserbare Organosilan der Formel (I) vorzugsweise (Rx)SiX₃ oder (Rx)R_{c}SiX_{3-c} ist.

Geeignete Beispiele für hydrolytisch abspaltbare bzw. hydrolysierbare Gruppen X sind Wasserstoff, Halogen (F, Cl, Br oder I, insbesondere Cl oder Br), Alkoxy (z. B. C₁₋₆-Alkoxy, wie z. B. Methoxy, Ethoxy, n-Propoxy, i-Propoxy und n-, i-, sek.- oder tert.-Butoxy), Aryloxy (vorzugsweise C₆₋₁₀-Aryloxy, wie z. B. Phenoxy), Alkaryloxy, z.B. Benzoyloxy, Acyloxy (z. B. C₁₋₆-Acyloxy, vorzugsweise C₁₋₄-Acyloxy, wie z. B. Acetoxy oder Propionyloxy) und Alkylcarbonyl (z. B. C₂₋₇-Alkylcarbonyl wie Acetyl). Ebenfalls geeignet sind NH₂, mit Alkyl, Aryl undloder Aralkyl mono- oder disubstituiertes Amino, wobei Beispiele für die Alkyl-, Aryl und/oder Aralkylreste die nachstehend für R angegebenen sind, Amido wie Benzamido oder Aldoxim- oder Ketoximgruppen. Zwei oder drei Gruppen X können auch miteinander verbunden sein, z. B. bei Si-Polyolkomplexen mit Glycol, Glycerin oder Brenzcatechin. Die genannten Gruppen können gegebenenfalls Substituenten, wie Halogen, Hydroxy oder Alkoxy enthalten.

Bevorzugte hydrolysierbare Reste X sind Halogen, Alkoxygruppen und Acyloxygruppen. Besonders bevorzugte hydrolysierbare Reste sind Alkoxygruppen, bevorzugter C₁₋₄-Alkoxygruppen, insbesondere Methoxy und Ethoxy.

Die hydrolytisch nicht abspaltbaren Reste R sind z. B. Alkyl z. B. C₁₋₂₀-Alkyl, insbesondere C₁₋₄-Alkyl, wie Methyl, Ethyl, n-Propyl, i-Propyl, n-Butyl, i-Butyl, sek.-Butyl und tert.-Butyl, Aryl, insbesondere C₆₋₁₀-Aryl, wie Phenyl und Naphthyl, und entsprechende Aralkyl- und Alkarylgruppen, wie Tolyl und Benzyl, und cyclische C₃-C₁₂-Alkyl- und -Alkenylgruppen, wie Cyclopropyl, Cyclopentyl und Cyclohexyl. Die Reste R können übliche Substituenten aufweisen, z.B. Halogen, wie Chlor oder Fluor, und Alkoxy. Der Rest R besitzt keine polymerisierbare Gruppe. Bevorzugte Reste R sind Alkylgruppen mit vorzugsweise 1 bis 4 Kohlenstoffatomen, insbesondere Methyl und Ethyl, sowie Arylreste wie Phenyl. Die Reste Rx umfassen mindestens eine polymerisierbare Gruppe, über die eine Vernetzung des sich bildenden Kondensats untereinander oder mit den gegebenenfalls zugegebenen organischen Monomeren oder Oligomeren möglich ist. Beispiele für die polymerisierbare Gruppe sind Epoxid, wie z. B. Glycidyl oder Glycidyloxy, Hydroxy, Amino, Monoalkylamino, Dialkylamino, gegebenenfalls substituiertes Anilino, Amid, Carboxy, Alkenyl, Alkinyl, Acryl, Acryloxy, Methacryl, Methacryloxy, Mercapto, Cyano, Isocyanato, Aldehyd, Keto, Alkylcarbonyl, Säureanhydrid und Phosphorsäure. Diese Substituenten sind über zweiwertige Brückengruppen, insbesondere Alkylen- oder Arylen-Brückengruppen, die durch Sauerstoff- oder -NH-Gruppen unterbrochen sein können, an das Siliziumatom gebunden. Die Brückengruppen enthalten z. B. 1 bis 18, vorzugsweise 1 bis 8 und insbesondere 1 bis 6 Kohlenstoffatome. Die genannten zweiwertigen Brückengruppen leiten sich z. B. von den oben genannten einwertigen Alkyl- oder Arylresten ab, wobei gegebenenfalls in der Kette auch eine Doppelbindung vorkommen kann. Bevorzugt ist die Brückengruppe eine Alkylen-, insbesondere eine Propylengruppe. Der Rest Rx weist vorzugsweise eine polymerisierbare Gruppe auf, kann aber auch mehr als eine funktionelle Gruppe aufweisen. Bevorzugte polymerisierbare Gruppen, über die eine Vernetzung möglich ist, sind Vinyl, Acryl oder Acryloxy, Methacryl oder Methacryloxy.

Bevorzugte Beispiele für hydrolytisch nicht abspaltbare Reste Rx mit polymerisierbarer Gruppe sind Alkenyl, z. B. C₂₋₂₀-Alkenyl, insbesondere C₂₋₄-Alkenyl, wie Vinyl, 1-Propenyl (Allyl), 2-Propenyl und Butenyl, Alkinyl, ein Glycidyl- oder ein Glycidyloxy-(C₁₋₂₀)-alkylen-Rest, wie β-Glycidyloxyethyl, γ-Glycidyloxypropyl, δ-Glycidyloxybutyl, ε-Glycidyloxypentyl, ω-Glycidyloxyhexyl, und 2-(3,4-Epoxy-cyclohexyl)ethyl, ein (Meth)acryloxy-(C₁₋₆)-alkylen-Rest, z. B. (Meth)acryloxymethyl, (Meth)acryloxyethyl, (Meth)acryloxypropyl oder (Meth)acryloxybutyl, und ein 3-Isocyanatopropylrest. Besonders bevorzugte Reste sind γ-Glycidyloxypropyl, Vinyl und (Meth)acryloxypropyl. Hierbei steht (Meth)acryl für Acryl und Methacryl. Diese funktionalisierten Organosilane werden auch entsprechend ihrer funktionalisierten Gruppe z.B. als (Meth)acrylsilane, Vinylsilane, Epoxysilane usw. bezeichnet.

Konkrete Beispiele sind Glycidyloxypropyltrimethoxysilan (GPTS), γ-Glycidyloxypropyltriethoxysilan (GPTES), 3-Isocyanatopropyltriethoxysilan, 3-Isocyanatopropyldimethylchlorsilan, 3-Aminopropyltrimethoxysilan (APTS). Bevorzugte Beispiele sind Vinylsilane, Acrylsilane und Methacrylsilane, wie Vinyltriethoxysilan, (Meth)acryloxy-alkyltrimethoxysilan und (Meth)acryloxyalkyltriethoxysilan, insbesondere (Meth)-acryloxypropyltrimethoxysilan und (Meth)acryloxypropyltriethoxysilan, (Meth)acryl-oxypropylmethyldimethoxysilan, (Meth)acryloxyethyltrimethoxysilan und (Meth)acryl-oxyethylmethyldimethoxysilan, wobei Methacryloxypropyltrimethoxysilan besonders bevorzugt ist.

Weitere Beispiele sind: CH₂=CH-Si(OOCCH₃)₃, CH₂=CH-SiCl₃, CH₂=CH-Si(OC₂H₅)₃, CH₂=CHSi(OC₂H₅)₃, CH₂=CH-Si(OC₂H₄OCH₃)₃, CH₂=CH-CH₂-Si(OC₂H₅)₃, CH₂=CH-CH₂-Si(OCH₃)₃,
CH₂=CH-CH₂-Si(OOCCH₃)₃, CH₂=C(CH₃)COO-C₃H₇-Si(OC₂H₅)₃,

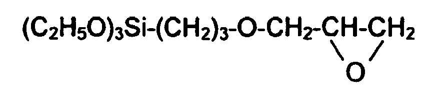

In bevorzugten Ausführungsformen werden neben der (a) mindestens einen Siliziumverbindung mit einer polymerisierbaren Gruppe eine oder mehrere weitere Siliziumverbindungen als Si-Komponente verwendet. Bevorzugte weitere Si-Komponenten sind (b) hydrolysierbare Silane mit mindestens einer nicht hydrolysierbaren organischen Gruppe und/oder (c) hydrolysierbare Silane ohne nicht hydrolysierbare organische Gruppen.

Die optionale Si-Komponente (b) ist ein Organosilan ohne polymerisierbare Gruppe. Beispiele sind Organosilane der allgemeinen Formel (II)

RₙSiX₄₋ₙ (II)

worin die Reste R gleich oder verschieden sind und hydrolytisch nicht abspaltbare Gruppen darstellen, die Reste X gleich oder verschieden sind und hydrolytisch abspaltbare Gruppen oder Hydroxygruppen darstellen und n den Wert 1, 2 oder 3, vorzugsweise 1 oder 2, hat.

Beispiele für R und X, einschließlich bevorzugter Beispiele, entsprechen den oben genannten Beispielen für R und X in der Formel (I). Bevorzugte Reste R sind Alkylgruppen mit vorzugsweise 1 bis 4 Kohlenstoffatomen, insbesondere Methyl und Ethyl, sowie Arylreste wie Phenyl. X ist bevorzugte Alkoxy.

Beispiele für Organosilane der allgemeinen Formel (II) sind Verbindungen der folgenden Formeln, wobei die Alkylsilane und insbesondere Methyltriethoxysilan besonders bevorzugt sind:
CH₃SiCl₃, CH₃Si(OC₂H₅)₃, C₂H₅SiCl₃, C₂H₅Si(OC₂H₅)₃, C₃H₇Si(OC₂H₅)₃, C₆H₅Si(OC₂H₅)₃, (C₂H₅O)₃Si-C₃H₆-Cl, (CH₃)₂SiCl₂, (CH₃)₂Si(OC₂H₅)₂, (CH₃)₂Si(OCH₃)₂, (CH₃)₂Si(OH)₂, (C₆H₅)₂SiCl₂, (C₆H₅)₂Si(OC₂H₅)₂, (i-C₃H₇)₃SiOH, n-C₆H₁₃CH₂CH₂Si(OC₂H₅)₃, n-C₈H₁₇CH₂CH₂Si(OC₂H₅)₃. CH₂OCH₂CH₂O(CH₂)₃-Si(OC₂H₅)₃,

Beispiele für die Si-Komponente (c) sind hydrolysierbare Silane ohne nicht hydrolysierbare Gruppen der allgemeinen Formel (III)

SiX₄ (III)

worin die Reste X die vorstehende Bedeutung, einschließlich der bevorzugten Bedeutung, für X in Formel (I) haben.

Beispiele für die hydrolysierbaren Silane der allgemeinen Formel (III) sind Si(OCH₃)₄, Si(OC₂H₅)₄, Si(OC₃H₇)₄, SiCh, HSiCl₃, Si(OOCCH₃)₄. Von diesen hydrolysierbaren Silanen ist Tetraethoxysilan besonders bevorzugt.

In einer besonders bevorzugten Ausführungsform werden neben der Si-Komponente (a) sowohl mindestens eine Si-Komponente (b) als auch eine Si-Komponente (c) zugegeben. Als Si-Komponente werden somit die Si-Komponente (a) allein oder gegebenenfalls in Mischung mit der Si-Komponente (b) und/oder der Si-Komponente (c) der Hydrolyse durch die Zugabe von Wasser unterworfen.

Besonders bevorzugt eingesetzte Siliziumverbindungen sind Methacryloxypropyltrimethoxysilan (MPTS), Tetraethoxysilan (TEOS), Methyltriethoxysilan (MTEOS), und Vinyltriethoxysilan (VTES), wobei in einer besonders bevorzugten Ausführungsform eine Kombination dieser Verbindungen als Si-Komponente eingesetzt wird. Es wurde überraschenderweise festgestellt, dass eine weitere Verbesserung erreicht werden kann, wenn als zusätzliche Komponente Polysiloxane, wie z.B. Poly(alkoxy-silane) oder Polyalkylsiloxane oder entsprechende Polyarylsiloxane und Copolymere davon, eingesetzt werden. Es können Polysiloxane eingesetzt werden, die keine reaktiven Gruppen tragen. Bevorzugt werden aber Polysiloxane eingesetzt, die mindestens eine reaktive Gruppe, insbesondere eine reaktive Endgruppe, aufweisen. Man kann dadurch IPN-Polymere mit kovalenten Bindungen zwischen den sich durchdringenden Polymeren erhalten. Es können aber auch IPN-Polymere gebildet werden, die rein physikalisch gemischt sind.

Es gibt eine große Vielfalt an Poly(alkoxysilanen), Polyalkylsiloxanen und Polyarylsilanen und Copolymeren davon mit reaktiven Endgruppen. Insbesondere sind solche Polysiloxane, insbesondere Polyalkylsiloxane, mit reaktiven Gruppen bzw. Endgruppen kommerziell erhältlich, z.B. von Gelest, Inc., Philadelphia. Beispiele für die reaktive Gruppe oder Endgruppe sind Vinyl, Hydrid, Silanol, Alkoxy, Amine, Epoxy, Carbinol, Methacrylat/Acrylat, Mercapto, Acetoxy, Chlorid und Dimethylamin. Über die reaktiven Gruppen bzw. Endgruppen können die Polysiloxane in das anorganische Netzwerk und gegebenenfalls in die organische Matrix eingebunden bzw. vernetzt werden. Wenn z.B. Polysiloxane mit Silanol-Endgruppen eingesetzt werden, wird die Silanol-Gruppe mit Hydroxygruppen der hydrolysierten Silane oder der Metall- oder Borverbindungen reagieren. Dadurch wird die Elastizität bzw. Druckfestigkeit des Formkörpers überraschenderweise noch weiter erhöht.

Die Polysiloxane können cyclisch, verzweigt oder bevorzugt linear sein. Die reaktive Gruppe kann an der Hauptkette oder einer Seitenkette vorliegen, ist aber bevorzugt eine Endgruppe. Es können natürlich mehr als eine reaktive Gruppe vorhanden sein, z.B. 2 oder mehr reaktive Gruppen. Ein lineares Polysiloxan enthält z.B. bevorzugt 2 reaktive Endgruppen. Als Polysiloxane mit reaktiven Gruppen oder Endgruppen werden Polysiloxane mit Silanol- und Alkoxy-Gruppen bevorzugt eingesetzt, insbesondere Polysiloxane mit Silanol-Endgruppen.

Beispiele für Poly(alkoxysilane), Polyalkyl- bzw. Polyarylsiloxane und Copolymere davon sind Polydimethylsiloxane, Polydiethylsiloxane, Polymethylethylsiloxane, Polydiphenylsiloxane und entsprechende Copolymere, die jeweils mindestens eine reaktive Gruppe enthalten. Spezielle Beispiele sind Polydimethylsiloxane mit Silanol-Endgruppen oder mit Alkoxy-Endgruppen, Poly(diethoxysiloxane) und Polydimethoxysiloxane.

Das Molekulargewicht der verwendeten Polysiloxane kann je nach Anwendungsbereich aus einem großen Bereich ausgewählt werden, beispielsweise im Bereich von 100 bis 10.000 g/mol. Bevorzugt sind Polysiloxane mit einem Molekulargewicht von 100 bis 3500 g/mol und bevorzugter 300 bis 3000 g/mol, z.B. 400 bis 2000 g/mol. Es können auch höhermolekulare Polysiloxane eingesetzt werden, z.B. mit einem Molekulargewicht bis zu 50000 g/mol oder mehr. Unter dem Molekulargewicht wird hier das Zahlenmittel des Molekulargewichts verstanden.

Die Reaktion zwischen Polysiloxanen und Siliziumverbindungen oder Metall- oder Borverbindungen kann unter Anwesenheit eines Katalysators, z.B. Hexachloroplatinsäure, Dibutlyzinndiacetat, Zinn-2-ethylhexanoat, oder bei erhöhter Temperatur, z.B. 80°C, stattfinden, ohne vorher die Siliziumverbindungen und/oder Metall- oder Borverbindungen hydrolysieren zu müssen.

Die Silane und Polysiloxane lassen sich nach bekannten Methoden herstellen; vgl. W. Noll, "Chemie und Technologie der Silicone", Verlag Chemie GmbH, Weinheim/Bergstraße (1968).

Als weitere Komponente für das Heterokondensat wird eine zusätzliche Verbindung, insbesondere eine hydrolysierbare Verbindung, von einem Element ausgewählt aus der III. Hauptgruppe, IV. Hauptgruppe, III. Nebengruppe und IV. Nebengruppe eingesetzt. Es handelt sich dabei um B und ein Metall aus diesen Gruppen, insbesondere Al, Ga, In, Tl, Ge, Ga, Sn, Pb, Ti, Zr, Hf, Sc, Y und La. Durch diese Komponente wird die Korrosionsresistenz der mit dem Bindemittel herstellbaren Formkörper erhöht. Hydrolysierbare Verbindungen von Titan, Aluminium, Zirconium, Zinn und Bor sind besonders bevorzugt, wobei Titanverbindungen am meisten bevorzugt sind. Die Verbindungen können einzeln oder als Mischung aus zwei oder mehr dieser Elemente eingesetzt werden.

Bei der Metall- oder Borverbindung kann es sich um eine Verbindung der Formel (IV) handeln

MXₐ (IV)

worin M B, Al, Ga, In, Tl, Ge, Ga, Sn, Pb, Ti, Zr, Hf, Sc, Y und La ist, X wie in Formel (I) definiert ist, einschließlich der bevorzugten Beispiele, wobei zwei Gruppen X durch eine Oxogruppe ersetzt sein können, und a der Wertigkeit des Elements entspricht, wobei bei Einsatz von Komplexliganden a auch größer oder bei mehrzähnigen Liganden auch kleiner als die Wertigkeit von M sein kann. Die Wertigkeit von M ist in der Regel 2, 3 oder 4. Gegebenfalls umfasst die Verbindung der Formel (IV) auch ein Gegenion. X kann neben den in Formel (I) angegeben Substituenten auch Sulfat, Nitrat, einen Komplexbildner, wie z.B. ein ß-Diketon, eine gesättigte oder ungesättigte Carbonsäure oder das Salz davon, eine anorganische Säure oder ein Salz davon und ein Aminoalkohol sein. Die Metall- oder Borverbindung ist bevorzugt eine hydrolysierbare Verbindung. Bevorzugt werden Metall- oder Boralkoxide eingesetzt.

Als Metallverbindungen sind die Alkoxide von Ti, Zr und Al, insbesondere von Ti, bevorzugt. Geeignete Metallverbindungen sind z.B. Ti(OC₂H₅)₄, Ti(O-n- oder i-C₃H₇)₄, Ti(OC₄H₉)₄, TiCl₄, Ti(O-iC₃H₇)₂Cl₂, Hexafluorotitansäure, TiOSO₄, Diisopropoxy-bis(ethylacetoacetato)titanat, Poly(dibutyltitanat), Tetrakis(diethylamino)titan, Titan-2-ethylhexoxid, Titanbis(triethanolamin)diisopropoxid, Titanchloridtriisopropoxid, Al(OC₂H₅)₃, Al(O-sek.-C₄H₉)₃, AlCl(OH)₂, Al(NO₃)₃, Zr(OC₃H₇)₄, Zirconium-2-ethylhexoxid, BCl₃, B(OCH₃)₃ und SnCl₄. Es können somit Verbindungen eingesetzt werden, die Komplexliganden umfassen, wie z.B. Acetylacetonat, Ethylacetoacetat, Vinylacetoacetat, Methacrylsäure, Dialkyldithiophosphat, Dodecylbenzolsulfonsäure, Ölsäure und Palmitinsäure. Beispiele sind Zr(OC₃H₇)₂(OOC(CH₃)=CH₂)₂, Titanacetylacetonat, Titanoxidbis(pentandionat), Ti(OC₃H₇)₃(OOC(CH₃)=CH₂) und Ti(OC₂H₄)₃(Allylacetoacetat). Von den Metallverbindungen sind Ti(O-iC₃H₇)₄, Ti(OC₄H₉)₄, Titanbis(triethanolamin)diisopropoxid und Ti(OC₃H₇)₃(OOC(CH₃)=CH₂) besonders bevorzugt.

Das Molverhältnis von Si-Atomen aller eingesetzten Si-Verbindungen zu den Metallatomen und Boratomen aller eingesetzten vorstehend genannter Metall- und Borverbindungen kann in breiten Bereichen gewählt werden, beträgt aber bevorzugt 10:1 bis 1:3 und bevorzugter 5:1 bis 1:1.

Neben den genannten Metall- oder Borverbindungen können zusätzliche Metallverbindungen eingesetzt werden. Beispiele für derartige Metallverbindungen sind Verbindungen von glas- oder keramikbildenden Metallen, insbesondere Verbindungen mindestens eines Metalls aus der Hauptgruppe V und/oder der Nebengruppen II und V bis VIII des Periodensystems der Elemente. Vorzugsweise handelt es sich dabei um hydrolysierbare Verbindungen von Mn, Cr, Fe, Ni und insbesondere V oder Zn. Ebenfalls einsetzbar sind z.B. hydrolysierbare Verbindungen von Elementen der Hauptgruppen **I** und **II** des Periodensystems z. B. Na, K, Ca und Mg. Auch hydrolysierbare Verbindungen der Lanthanoiden wie Ce können verwendet werden. Es handelt sich dabei etwa um Metallverbindungen der allgemeinen Formel M'Xₐ, worin M' ein Metall der Hauptgruppen I, **II** oder V oder der Nebengruppen II und V bis VIII des Periodensystems der Elemente oder ein Lanthanoid ist, X und a wie in Formel (IV) definiert sind.

In einer weiteren besonders bevorzugten Ausführungsform wird auch eine rein organische Komponente zugegeben, so dass eine zusätzliche organische Matrix aufgebaut werden kann. Überraschenderweise konnte durch zusätzlichen Einsatz einer derartigen organischen Komponente eine noch weiter verbesserte mechanische Festigkeit erzielt werden. Auf diese Weise ergeben sich nach dem Härten zwei sich durchdringende Polymere, nämlich das Heterokondensat und ein rein organisches Polymer, so dass IPN-Polymere gebildet werden, die vorstehend allgemein beschrieben wurden. Die sich durchdringenden Polymere können rein physikalisch gemischt sein, sind aber bevorzugt kovalent miteinander verknüpft.

Für die organische Komponente werden ein oder mehrere organische Monomere, Oligomere oder Polymere verwendet, die jeweils eine oder mehrere funktionelle Gruppe aufweisen. Es kann auch ein Gemisch aus zwei oder mehr derartiger Monomere. Oligomere oder Polymere verwendet werden. Bevorzugt umfasst die organische Komponente mindestens zwei funktionelle Gruppen. Die funktionellen Gruppen dienen zur Polymerisation bzw. Verknüpfung der organischen Komponente, wobei es sich um eine funktionelle Gruppe oder um korrespondierende funktionelle Gruppen handeln kann. Sie wird bevorzugt so ausgewählt, dass sie mit der polymerisierbaren Gruppe des funktionalisierten Organosilans reaktionsfähig ist. Bei der Härtung reagieren dann die funktionellen Gruppen der organischen Komponente auch mit den polymerisierbaren Gruppen des funktionalisierten Organosilans unter Bildung von kovalenten Bindungen.

Die organischen Monomere, Oligomere oder Polymere mit mindestens einer funktionellen Gruppe sind dem Fachmann als Vorstufen zur Herstellung von organischen Polymeren bestens vertraut und er kann sie ohne weiteres in geeigneter Weise je nach Bedarf auswählen. Beispiele für zweckmäßige funktionelle Gruppen sind C=C-Doppelbindungen, Hydroxy-, Amino-, Carboxyl-, Säureanhydridgruppen-, Epoxid- und/oder Isocyanatgruppen. Weitere Beispiele sind Säurechloridgruppen, Nitril-, Isonitril- und SH-Gruppen. Bevorzugte funktionelle Gruppen sind C=C-Doppelbindungen, wie Vinyl-, Acryl- und Methacrylgruppen. Als Polymere mit freien funktionellen Gruppen eignen sich z. B. Polyisocyanate, Melaminharze, Polyester und Epoxidharze.

Beispiele sind mono-, bi- oder polyfunktionelle Acrylate und Methacrylate. Bei der eingesetzten organischen Komponente kann es sich um definierte Einzelverbindungen oder Gemische von Verbindungen mit unterschiedlichem Polymerisationsgrad handeln. Beispiele sind Diethylenglycoldimethacrylat (DEGMA), Triethylenglycoldimethacrylat (TEGDMA), Bisphenol A-glycidylmethacrylat (BisGMA), Bisphenol A-diacrylat, Diurethandimethacrylat, Urethandimethacrylat (UDMA), Laromer®-Acrylate der BASF, Ebecryl®, Pentaerythrittriacrylat (PETIA), Hexandioldiacrylat, Trimethylolpropantriacrylat, Trimethylolpropantrimethacrylat, Neopentylglycoldimethacrylat, Neopentylglycoldiacrylat, Epoxyacrylatharze, oligomere Methacrylate, wie LR 8862, LR 8907 von BASF, oder oligomere Urethanacrylate, wie UA 19T von BASF.

Die organische Komponente wird bevorzugt nach der Zugabe der Metall- oder Borverbindung, bevorzugter nach der Reifung zugegeben. Die vorstehend genannten Monomere, Oligomere oder Polymere mit Acryl- oder Methacrylgruppen werden bevorzugt eingesetzt, wenn funktionalisierte Organosilane mit (Meth)acryl-, (Meth)acryloxy- oder Vinylgruppen im Hydrolysat oder Kondensat enthalten sind.

Das Gewichtsverhältnis aller eingesetzten anorganischen Komponenten, einschließlich der darin enthaltenen organischen Gruppen, zu den eingesetzten rein organischen Komponenten, falls verwendet, kann in breiten Bereichen gewählt werden und beträgt, bezogen auf das gehärtete Bindemittel, z.B. 95:5 bis 5:95 und bevorzugt 80:20 bis 20:80.

Durch die Zugabe der organischen Komponente können IPN-Polymere aus sich durchdringenden Polymeren, nämlich dem Heterokondensat und dem rein organischen Polymer, aufgebaut werden. Im IPN-Polymer können die beiden Polymere physikalisch gemischt oder über kovalente Bindungen miteinander verknüpft sein.

Bei dem erfindungsgemäßen Verfahren wird die hydrolysierbare Siliziumverbindung in der ersten Stufe durch Vermischung mit Wasser einer Hydrolyse unterworfen. Dies erfolgt insbesondere nach dem Sol-Gel-Verfahren. Beim Sol-Gel-Verfahren werden allgemein die hydrolysierbaren Verbindungen mit Wasser, gegebenenfalls in Gegenwart von sauren oder basischen Katalysatoren, hydrolysiert. Vorzugsweise erfolgt die Hydrolyse in Gegenwart saurer Katalysatoren, z. B. Salzsäure, Phosphorsäure oder Ameisensäure, bei einem pH-Wert von vorzugsweise 1 bis 3. Das sich bildende Sol kann durch geeignete Parameter, z. B. Kondensationsgrad, Lösungsmittel oder pH-Wert, auf die für das Konsolidierungsmittel gewünschte Viskosität eingestellt werden. Weitere Einzelheiten zum Sol-Gel-Verfahren finden sich in dem oben genannten Buch von Brinker und Scherer.

Im vorliegenden Verfahren wird bevorzugt ein Katalysator für die Hydrolyse eingesetzt, bevorzugt eine Säure, wie Salzsäure, Phosphorsäure oder Ameisensäure. Dieser Katalysator ist bevorzugt direkt im einzusetzenden Wasser enthalten bzw. gelöst.

Für die Hydrolyse und spätere Kondensation können stöchiometrische Wassermengen, aber auch geringere oder größere Mengen verwendet werden, z.B. bis zu 1,2 Mol Wasser pro Mol der vorhandenen hydrolysierbaren Gruppen. Vorzugsweise wird eine unterstöchiometrische Wassermenge, bezogen auf die vorhandenen hydrolysierbaren Gruppen, angewandt. Die zur Hydrolyse und Kondensation der hydrolysierbaren Verbindungen eingesetzte Wassermenge beträgt vorzugsweise 0,1 bis 0,9 Mol, und besonders bevorzugt 0,25 bis 0,75 Mol Wasser pro Mol der vorhandenen hydrolysierbaren Gruppen. Oft werden besonders gute Ergebnisse mit weniger als 0,7 Mol Wasser, insbesondere 0,45 bis 0,65 Mol Wasser, pro Mol der vorhandenen hydrolysierbaren Gruppen erzielt.

Als vorhandene hydrolysierbare Gruppen werden hier alle hydrolysierbaren Gruppen der insgesamt zugegebenen Ausgangsverbindungen verstanden, also einschließlich diejenigen der erst später zugegebenen Metall- oder Borverbindungen. Wie später erläutert, kann gegebenenfalls ein Teil des vorgesehenen Wassers zu einem späteren Zeitpunkt zugegeben werden.

Das erfindungsgemäße Verfahren ist ein zweistufiges Verfahren und beruht insbesondere auf der zeitlich gesteuerten Zugabe der Metall- oder Borverbindung. Wie vorstehend erläutert besitzen die hydrolysierbaren Silane und die Metall- oder Borverbindungen im Hinblick auf Hydrolyse und Kondensation unterschiedliche Reaktivitäten und überdies sind die Hydrolyseprodukte mehr oder weniger instabil, so dass sich nach erfolgter Hydrolyse Kondensationsreaktionen anschließen. Werden z.B. hydrolysierbare Silane und Titanverbindungen gleichzeitig hydrolysiert so werden praktisch unvermeidlich separate TiO₂-Partikel gebildet, so dass ein Großteil des Ti nicht in das sich bildende Kondensat eingebaut wird. Das hat zur Folge, das sich kein homogenes Mischkondensat ausbilden kann.

Erfindungsgemäß konnte überraschenderweise ein homogenes Heterokondensat mit deutlich verbesserten Eigenschaften erhalten werden, wenn die mindestens eine hydrolysierbare Metall- oder Borverbindung zu einem Zeitpunkt zugegeben wird, der innerhalb von 15 s bis 15 min nach Vermischung der hydrolysierbaren Siliziumverbindung mit dem Wasser liegt. Bevorzugt liegt der Zeitpunkt 20 s bis 10 min, bevorzugt 30 s bis 5 min und besonders bevorzugt 45 s bis 3 min nach der Vermischung.

Die Vermischung der hydrolysierbaren Siliziumverbindung mit dem Wasser, das gegebenenfalls einen Katalysator enthält, ist dann erfolgt, wenn die ganze vorgesehene Menge Wasser zur hydrolysierbaren Siliziumverbindung gegeben worden ist oder umgekehrt. Die Zugabe erfolgt in der Regel in einer Portion und möglichst schnell (z.B. weniger als 20 s), bevorzugt in einem Schuss, so dass eine praktisch augenblickliche Zugabe (z.B. weniger als 5 s) erfolgt. Zweckmäßigerweise geht man so vor, dass man die hydrolysierbare Siliziumverbindung und gegebenenfalls die weiteren Si-Komponenten vorlegt und dann die vorgesehene Menge Wasser möglichst schnell zugibt. Bevorzugt wird bei der Vermischung gerührt.

Bei dem genannten Zeitpunkt wird die Zugabe der vorzugsweisen hydrolysierbaren Metall- und Borverbindung gestartet, ebenfalls bevorzugt unter Rühren. Die Zugabe erfolgt bevorzugt in einer Portion und ebenfalls möglichst rasch (z.B weniger als 1 Min oder 30 s), bevorzugt in einem Schuss (weniger als 20 s, z.B. etwa 10 s). Ohne an eine Theorie gebunden sein zu wollen, wird davon ausgegangen, dass durch diese Zeitsteuerung der Zugabe erreicht wird, dass die Zugabe der Metall- oder Borverbindung erfolgt, wenn die Hydrolyse der Si-Komponente im wesentlichen stattgefunden hat, während Kondensationsreaktionen im wesentlichen noch nicht stattgefunden haben.

Bei Zugabe von Wasser zu der oder den hydrolysierbaren Siliziumverbindungen ergeben sich eine wässrige und eine organische Phase. Dies wird durch eine Trübung der gerührten Reaktionsmischung angezeigt. Am Umschlagpunkt gehen diese beiden Phasen ineinander über. Dies wird häufig durch ein Klarwerden der Reaktionsmischung angezeigt. Auch wenn die Reaktionsmischung trübe bleibt, z.B. wegen vorhandener Polysiloxane, ist dieser Umschlagpunkt erkennbar.

Die Zugabe der Metall- oder Borverbindung kann noch genauer gesteuert werden, wenn die Zugabe möglichst in der Nähe des Umschlagpunkts des Reaktionsgemisches erfolgt. Bevorzugt liegt daher der Zeitpunkt, zu dem die hydrolysierbare Metall- oder Borverbindung zugegeben wird, kurz vor oder nach dem Umschlagpunkt, was natürlich den Umschlagpunkt selbst einschließt. Kurz heißt dabei z.B. weniger als 3 min, bevorzugt weniger als 1 min. Zwar kann der Umschlagpunkt aus Vorversuchen annähernd vorbestimmt werden, aus Zweckmäßigkeitsgründen ist aber in der Regel eine Zugabe nach dem Umschlagpunkt sinnvoller. In einer besonders bevorzugten Ausführungsform wird die Metall- oder Borverbindung zu dem Zeitpunkt zugegeben, wenn der Umschlagpunkt erreicht worden ist.

Der Umschlagpunkt kann je nach Bedingungen, wie z.B. Art und Reaktivität der eingesetzten Si-Komponenten, des gegebenenfalls eingesetzten Katalysators oder der Menge an eingesetztem Wasser, schneller oder langsamer erreicht werden. Bei den bevorzugten Ausführungsformen, ist der Umschlagpunkt etwa 1 bis 2 min nach Zugabe des Wassers feststellbar.

Das erhaltene Bindemittel kann wie es ist verwendet werden. In einer bevorzugten Ausführungsform lässt man das Bindemittel durch einfaches Stehenlassen. reifen bzw. altern, z.B. für mindestens 1 h und bevorzugt mindestens 5 h. Danach kann es für die gedachte Anwendung eingesetzt werden.

Es wurde auch überraschenderweise festgestellt, dass ein noch homogeneres Heterokondensat erhalten werden kann, wenn die Ausgangsmaterialien unverdünnt, d.h. ohne Lösungsmittel, eingesetzt werden. Die Hydrolyse und Kondensation, die nach Zugabe von Wasser und der anschließenden Zugabe der Bor- oder Metallverbindung erfolgt, wird daher bevorzugt ohne Zugabe von Lösungsmittel durchgeführt. Es ist dabei zu berücksichtigen, dass sich bei den Hydrolysereaktionen der Ausgangsmaterialien wie den Alkoholaten Lösungsmittel in situ bilden kann. Das Reaktionsgemisch ist daher beim Fortschritt der Hydrolyse in der Regel nicht lösungsmittelfrei, aber wesentlich weniger verdünnt als es sonst nach dem Stand der Technik üblich ist. Nach Vervollständigung der Reaktion, z.B. nach der obigen Reifung kann Lösungsmittel zugegeben werden, z.B. zur Einstellung der Viskosität.

Die vorgesehene Menge an Wasser kann vollständig in Schritt a) zugegeben werden. In einer Ausführungsform kann von der vorgesehenen Menge ein Teil erst nach der Zugabe der Metall- oder Borverbindung zugegeben werden. In diesem Fall können nicht 100% der vorgesehenen Wassermenge wie vorstehend beschrieben in Schritt a) zur Hydrolyse verwendet werden, sondern z.B. 90 bis 20% und bevorzugt 70 bis 30% der vorgesehenen Wassermenge wie vorstehend beschrieben. Der Rest der vorgesehenen Menge wird dann z.B. direkt nach der Zugabe der hydrolysierbaren Metall- oder Borverbindung oder bevorzugt nach einer Reifung zugegeben. In einer anderen Ausführungsform können 100% der vorgesehenen Wassermenge wie vorstehend beschrieben in Schritt a) zur Hydrolyse verwendet werden und eine zusätzliche Menge Wasser kann nach der Zugabe der Metall- oder Borverbindung zugegeben werden. Zweckmäßige Mengen für das zusätzliche Wasser entsprechen dann den vorstehend angegebenen Mengen für Schritt a). Es kann auch mehr Wasser zugegeben werden, vor allem nach erfolgter Reifung.

Die Polysiloxankomponente wird bevorzugt zusammen mit der anderen Si-Komponenten vorgelegt, bevor das Wasser zugegeben wird. Gegebenenfalls kann sie auch zu einem späteren Zeitpunkt zugegeben werden. Die vorstehend beschriebenen zusätzlichen Metallverbindungen werden bevorzugt zusammen mit der Metall- oder Borverbindung der Formel (IV) zugesetzt.

Die beschriebenen Komponenten werden wie vorstehend erläutert bevorzugt als solche eingesetzt, können aber gegebenenfalls auch jeweils mit einem Lösungsmittel verdünnt werden. Lösungsmittel können auch nach der Herstellung des Bindemittels zugegeben werden, z.B. zur Einstellung der Viskosität. Es kann auch gegebenenfalls hierfür zusätzliches Wasser eingesetzt werden, bevorzugt aber erst nach einer Reifung. Bei dem Einsatz von Alkoxiden als Ausgangsverbindungen entstehen die entsprechenden Alkohole als Nebenprodukt. Dem hergestellten Bindemittel können nach Bedarf auch übliche Additive zugegeben werden. Die Hydrolyse/Kondensationsreaktion erfolgt gewöhnlich etwa bei Raumtemperatur, kann aber auch bei niedrigeren oder höheren Temperaturen durchgeführt werden. Gewöhnlich ist die Reaktion exotherm, so dass eine Erwärmung stattfindet. Gegebenfalls kann gekühlt werden.

Zum Bindemittel werden bevorzugt auch thermische oder photolytische Katalysatoren für die Polymerisation zugegeben, vorzugsweise thermische Initiatoren. Es kann sich z.B. um ionische Starter oder Radikalstarter handeln. Der Katalysator initiiert die Polymerisation, wodurch das Bindemittel gehärtet bzw. vernetzt wird. Diese Katalysatoren sind dem Fachmann bekannt und er kann die geeigneten unter Berücksichtigung der verwendeten Komponenten ohne weiteres auswählen. Beispiele für radikalische Thermostarter sind organische Peroxide, z.B. Diacylperoxide, Peroxydicarbonate, Alkylperester, Alkylperoxide, Perketale, Ketonperoxide und Alkylhydroperoxide, und Azoverbindungen. Konkrete Beispiele sind Dibenzoylperoxid, Trigonox^{®} 121, tert-Butylperbenzoat, Amylperoxy-2-ethylhexanoat und Azobisisobutyronitril. Ein Beispiel für einen ionischen Starter, der für die thermische Initiierung geeignet ist, ist 1-Methylimidazol. Diese Starter werden in den üblichen, dem Fachmann bekannten Mengen eingesetzt, z.B. 0,01 bis 5 Gew.-%, bezogen auf den Gesamtfeststoffgehalt des Bindemittels.

Beispiele für einsetzbare weitere Lösungsmittel sind Alkohole, vorzugsweise niedere aliphatische Alkohole (C₁-C₈-Alkohole), wie Methanol, Ethanol, 1-Propanol, Isopropanol und 1-Butanol, Ketone, vorzugsweise niedere Dialkylketone, wie Aceton und Methylisobutylketon, Ether, vorzugsweise niedere Dialkylether, wie Diethylether, oder Monoether von Diolen, wie Ethylenglycol oder Propylenglycol, mit C₁-C₄-Alkoholen, Amide, wie Dimethylformamid, Tetrahydrofuran, Dioxan, Sulfoxide, Sulfone oder Butylglycol und deren Gemische. Bevorzugt werden Alkohole verwendet. Es können auch hochsiedende Lösungsmittel eingesetzt werden; z. B. Polyether wie Triethylenglycol, Diethylenglycoldiethylether und Tetraethylenglycoldimethylether. In manchen Fällen finden auch andere Lösungsmittel Verwendung, z.B. Leichtparaffine (Petrolether, Alkane und Cycloalkane), Aromaten, Heteroaromaten und halogenierte Kohlenwasserstoffe.

Andere herkömmliche Additive sind z. B. Farbstoffe, Pigmente, Viskositätsregulatoren und Tenside. Für die Herstellung von Emulsionen des Bindemittels können z.B. die bei Siliconemulsionen üblichen stabilisierenden Emulgatoren wie z.B. Tween 80 und Brij 30 herangezogen werden.

Das erhaltene erfindungsgemäße Bindemittel liegt gewöhnlich partikelfrei als Lösung oder Emulsion vor, es ist insbesondere frei von kristallinen Produkten oder Partikeln. Insbesondere handelt es sich um ein Bindemittelsol. Durch Photokorrelationsspektroskopie (PCS) konnte an den in den Beispielen erhaltenen Bindemitteln gezeigt werden, dass im wesentlichen keine Partikel enthalten sind. Dies zeigt, dass nicht wie nach dem Stand der Technik TiO₂-Teitchen gebildet werden, sondern ein homogenes Heterokondensat gebildet wird.

Erfindungsgemäß wird dementsprechend ein Bindemittel bereitgestellt, das ein Heterokondensat umfasst, das eine Metallo- oder Borosiloxan ist und Heteroatomeinheiten von Heteroatomen ausgewählt aus B, Al, Ga, In, Tl, Ge, Ga, Sn, Pb, Ti, Zr, Hf, Sc, Y und La, die über Sauerstoffbrücken in das Siloxangerüst eingebaut sind, und Siloxaneinheiten, bei denen das Siliziumatom eine nicht hydrolysierbare organische polymerisierbare Gruppe aufweist, enthält. Das Heteroatom ist je nach Wertigkeit über 2, 3 oder 4 Sauerstoffbrücken in das Siloxangerüst eingebaut. Bevorzugt werden als Heteroatome B, Al, Sn, Ti oder Zr eingesetzt, so dass Boro-, Alumino-, Stanno-, Titano- oder Zirconosiloxane gebildet werden, wobei Titanosiloxane besonders bevorzugt sind.

Zumindest ein Teil der Si-Atome oder alle Si-Atome des Siloxangerüsts weisen eine nicht hydrolysierbare organische polymerisierbare Gruppe auf. Die Si-Atome mit organischer polymerisierbaren Gruppe sind über mindestens eine, bevorzugt 2 und besonders bevorzugt 3 Sauerstoffbrücken in dem Heterokondensat gebunden. Die genaue Struktur hängt dabei von der hydrolysierbaren Si-Komponente (a) ab, die im erfindungsgemäßen Verfahren eingesetzt wird. Wenn zusätzlich Si-Komponenten (b) und/oder (c) gemäß den Formeln (II) und (III) eingesetzt werden, umfasst das Heterokondensat auch dementsprechende Siloxaneinheiten. Aus der Si-Komponente (a) ergeben sich Siloxaneinheiten mit einem Siliciumatom, das mindestens eine nicht hydrolysierbare organische nicht polymerisierbare Gruppe enthält und über 1, bevorzugt 2 und besonders bevorzugt 3 Sauerstoffbrücken im Kondensat gebunden ist. Die Si-Komponente (b) führt zu tetrafunktionellen Siloxaneinheiten im Heterokondensat, d.h. das Si-Atom ist über 4 Sauerstoffbrücken in das Gerüst eingebunden.

Die Bildung des Heterokondensats kann schematisch ohne Berücksichtigung von Mengenverhältnissen oder Verteilung wie folgt veranschaulicht werden, wobei die Reste Rx die nicht hydrolysierbare organische polymerisierbare Gruppe und X die hydrolysierbare Gruppe wie in den obigen Formeln definiert darstellen:

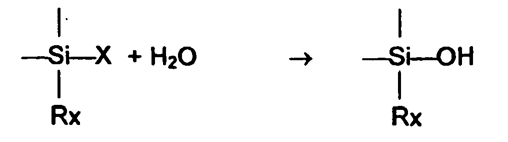

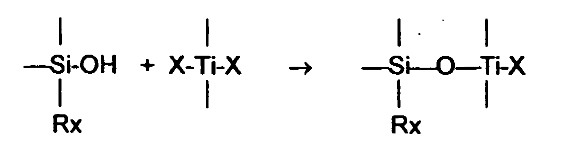

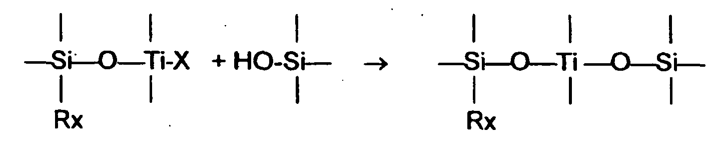

Die nicht definierten Valenzen im Schema können dabei Substituenten gemäß den obigen Formeln, OH-Gruppen oder Sauerstoffbrücken bedeuten. Über die polymerisierbare Gruppe Rx können bei der Härtung kovalente Bindungen innerhalb des anorganischen Gerüsts und gegebenenfalls mit den zugesetzten organischen Komponenten aufgebaut werden. Durch das erfindungsgemäße Verfahren können vorteilhafterweise sehr homogene Heterokondensate gebildet werden, in denen die Heteroatome homogen im Kondensat d.h. molekulardispers verteilt sind. Im Gegensatz dazu kondensieren die Heteroatome gemäß den Verfahren nach dem Stand der Technik im wesentlichen untereinander, so dass z.B. im Fall von Ti im wesentlichen TiO₂-Partikel neben einem Siloxankondensat gebildet werden und keine homogenen Heterokondensate erhalten werden.

Ein weiterer wichtiger Vorteil der erhaltenen Bindemittel besteht darin, dass sie auch nach längerer Zeit als Sol oder Lösung vorliegen und kein Gel bilden. So gelierten die Bindemittel der Beispiele 1 bis 4 erst nach 1 bis 2 Tagen, während die Bindemittel der Beispiele 5 und 6 auch nach 5 Tagen stabil waren und keine Gelbildung zeigten. Die Stabilität der Bindemittelsole ist wichtig, da gelierte Bindemittel nicht mehr brauchbar sind, da eine Vermischung mit dem jeweiligen Material nicht mehr möglich ist. Erfindungsgemäße werden stabile und damit lagerfähige Bindemittel erhalten. Die nach den Verfahren des Standes der Technik hergestellten Kondensate gelieren bereits nach kurzer Zeit, manchmal innerhalb weniger als 1 h. Solche Kondensate sind als Bindemittel praktisch unbrauchbar.

Es werden öl-, heißwasser- und temperaturbeständige Bindemittel erhalten. Sie eignen sich zur Herstellung von Formkörper bzw. Festigung von Materialien, indem das Bindemittel mit einem geeigneten Material, z.B. in Form von Teilchen, Granulat oder Fasern, gemischt, gegebenenfalls in die gewünschte Form gebracht und dann gehärtet wird. Das abzubindende Material kann z.B. aus Metallen, Nichtmetallen, Glas, Keramik, Kohlenstoff, Oxiden, Nitriden, Carbiden, Boriden, Mineralien, Kunststoffen, Kunststofffasern, Glasfasern, Mineralfasern, Naturfasern, Sand und Holzwerkstoffen ausgewählt. In einer bevorzugten Ausführungsform dient das erfindungsgemäße Bindemittel zur Festigung von anorganischen Granulaten, wie z.B. Sand. Hierfür wird eine Schüttung von anorganischen Granulaten oder einem anderen Material mit dem Bindemittel gemischt und dann gehärtet. Die Mischung kann auf übliche Weise erfolgen, z.B. durch Vermengen oder Infiltrieren des Bindemittels in das zu festigende Material, z.B. durch Einpumpen.

Die Aushärtung des Bindemittels bzw. des Formkörpers wird bevorzugt thermisch durch Zufuhr von Wärme durchgeführt. Beispiele für hierfür geeignete Katalysatoren bzw. Starter wurden vorstehend genannt. Eine andere Art der Härtung ist die Zufuhr von Kondensationskatalysatoren, die eine weitere Vernetzung der anorganisch vernetzbaren SiOH-Gruppen oder Metall-OH-Gruppen unter Bildung eines anorganischen Netzwerkes bewirken. Hierfür geeignete Kondensationskatalysatoren sind z. B. Basen aber auch Fluoridionen.

Die Eigenschaften von mit einem Bindemittel gebundenen Materialien hängen auch von den Bedingungen ab, unter denen sie gehärtet werden. Die Härtung wird auch als Abbinden bezeichnet. In der Regel erhält man ein verbessertes Verhalten, wenn der Abbindeprozess bei etwa den gleichen Bedingungen erfolgt, bei denen die abgebundenen Formkörper oder Formationen eingesetzt werden sollen bzw. vorliegen. Für Anwendungen bei erhöhten Drücken und Temperaturen ist es daher wünschenswert, auch die Herstellung unter etwa den gleichen Bedingungen durchzuführen.

So liegen z.B. in relativ großen Wassertiefen hydrothermale Bedingungen vor, d.h. eine erhöhte Temperatur und erhöhter Druck, so dass es für Anwendungen in solchen Wassertiefen zweckmäßig ist, das Abbinden auch bei den entsprechenden hydrothermalen Bedingungen, z.B. bei Temperaturen oberhalb 40°C und mindestens 4 bar, oder direkt vor Ort des Einsatzes durchzuführen. Ein besonderer Vorteil des erfindungsgemäßen Bindemittels besteht darin, dass es auch unter solchen Hydrothermalbedingungen gehärtet bzw. abgebunden werden kann, so dass es für Anwendungen unter diesen Bedingungen, etwa unter Wasser; besonders geeignet ist.

Die Abbindung (Härtung) erfolgt für solche Anwendungen bevorzugt unter erhöhter Temperatur und erhöhtem Druck, bezogen auf die Normalbedingungen, d.h. der Druck ist größer als 1 bar und die Temperatur ist höher als 20°C. Bevorzugt wird das Bindemittel entsprechend den geologischen Rahmenbedingungen des Reservoirs, in der es eingesetzt wird, in der Regel bei Temperaturen oberhalb 40°C und Drücken von mindestens 40 bar gehärtet. Durch den Einsatz der organischen Komponente wird zudem eine verbesserte mechanische Festigkeit und eine gute Flexibilität durch Bildung des IPN-Polymers nach Abbinden erreicht.

Da insbesondere unter Hydrothermalbedingungen ein Abbinden von Materialien mit dem erfindungsgemäßen Bindemittel ein Verdichtungsprozeß teilweise oder ganz verhindert wird, kann das Bindemittel Poren großvolumig verschließen. Dies kann bevorzugt durch Durchleiten eines festen oder flüssigen Mediums in das abzubindende Material, das mit dem Bindemittel vermengt ist, verhindert bzw. beseitigt werden, wodurch eine Porosität in der gewünschten Weise eingestellt werden kann. Die Einleitung erfolgt insbesondere vor oder während des Abbindens über einen bestimmten Zeitraum.

Parameter für das Durchpumpen, wie Dauer, Zeitpunkt, Menge oder Durchflussgeschwindigkeit der flüssigen oder gasförmigen Phase, können vom Fachmann ohne weiteres in geeigneter Weise gewählt werden, um die gewünschte Porosität einzustellen. Die Einleitung kann z.B. vor oder nach einer teilweisen Härtung erfolgen, wobei nach und/oder während der Einleitung eine vollständige Aushärtung erfolgt. Zur Einleitung eines flüssigen oder gasförmigen Mediums können z.B. ein inertes Lösungsmittel oder Gas, z. B. N₂, CO₂ oder Luft, eingepumpt werden, wodurch die Porenvolumina freigespült und Reaktionsprodukte abgeführt werden. Das flüssige oder gasförmige Medium kann gegebenenfalls Katalysatoren und/oder Gas freisetzende Komponenten oder gelöste Stoffe enthalten.

Das erfindungsgemäße Bindemittel kann somit zur Bildung von Formkörpern oder zur Verfestigung von Formationen benutzt werden. Insbesondere kann das Bindemittel zur Verfestigung von geologischen Formationen und zur Verfestigung von Granulat-Schüttungen, wie sie bei der Öl- und Gasförderung zum Freihalten der Quellen eingesetzt wird, verwendet werden. Das Bindemittel eignet sich auch zur Festigung von Formsanden. Weitere Anwendungsgebiete für das Bindemittel sind die Festigung von mürben Sandsteinen in der Architektur oder die Herstellung von Bremsbelägen.

Das erfindungsgemäße Bindemittel ermöglicht aufgrund seiner chemischen Konstitution wie vorstehend erläutert eine schnelle und wirksame Verfestigung von öl- oder wasserführenden, meist sandhaltigen geologischen Formationen. Weiter wurde gefunden, dass sich die Bindemittel auch besonders gut für kontaminierte Sande, insbesondere ölverschmutzte Sande, eignen, da das Bindemittel Schmutz, insbesondere eine Ölschicht auf der anorganischen Oberfläche unterwandern und ablösen kann. Letzteres hat den zusätzlichen Effekt, dass solche Systeme auch dazu geeignet sind, Fette und Öle von anorganischen Oberflächen abzulösen und z. B. den Austrag solcher Substanzen aus den Zwickeln von Sandschüttungen oder auch geologischen Formationen zu verbessern. Es gelingt somit, Bindungsprozesse in ölhaltigen Sanden zu realisieren und solche Sande von Öl zu reinigen. Eine Behandlung von kontaminiertem Sand mit dem Bindemittel kann somit eine festigende oder eine reinigende Funktion haben oder beide Zwecke erfüllen.

Hierfür kann das Heterokondensat zusätzlich eine Komponente enthalten, die oleophob und hydrophob ist, wodurch das Benetzungsverhalten von geologischen Formationen verändert werden kann. Vorzugsweise wird für die oleophobe und hydrophobe Komponente des Heterokondensats als zusätzliche Si-Komponente zur Herstellung des Heterokondensats ein oder mehrere Silane der allgemeinen Formel (V)

Rf(R)_{b}SiX_{(3-b)} (V)

eingesetzt, worin X und R wie in Formel (I) definiert sind, Rf eine nicht-hydrolysierbare Gruppe ist, die 1 bis 30 Fluoratome an aliphatische Kohlenstoffatome gebunden aufweist, und b 0, 1 oder 2 ist. Diese Verbindungen werden im folgenden auch als Fluorsilane bezeichnet. Das Silan kann im erfindungsgemäßen Verfahren als zusätzliche Si-Komponente genauso eingesetzt werden, wie vorstehend für die anderen optionalen Si-Komponenten beschrieben.

In der Formel (V) ist Rf vorzugsweise eine fluorierte Alkylgruppe, z.B. mit 3 bis 20 C-Atomen und Beispiele sind CF₃CH₂CH₂, C₂F₅CH₂CH₂, n-c₆F₁₃CH₂CH₂, i-C₃F₇OCH₂CH₂CH₂, n-C₈F₁₇CH₂CH₂ und n-C₁₀F₂₁-CH₂CH₂. Bevorzugte Beispiele für Rf sind 1H,1H,2H,2H-Perfluoroctyl. Beispiele für einsetzbare Fluorsilane sind CF₃CH₂CH₂SiCl₂(CH₃), CF₃CH₂CH₂SiCl(CH₃)₂, CF₃CH₂CH₂Si(CH₃)(OCH₃)₂, C₂F₅-CH₂CH₂-SiZ₃, n-C₆F₁₃-CH₂CH₂SiZ₃, n-C₈F₁₇-CH₂CH₂-SiZ₃, n-C₁₀F₂₁-CH₂CH₂-SiZ₃, worin Z = OCH₃, OC₂H₅ oder Cl; i-C₃F₇O-CH₂CH₂CH₂-SiCl₂(CH₃), n-C₆F₁₃-CH₂CH₂-Si(OCH₂CH₃)₂, n-C₆F₁₃-CH₂CH₂-SiCl₂(CH₃) und n-C₆F₁₃-CH₂CH₂-SiCl(CH₃)₂.

Das Bindemittel kann eine Änderung des Benetzungsverhaltens von Sanden bewirken, so dass es eher als ein die Benetzung regulierendes Mittel dient. Hierfür kann es zweckmäßig sein, das Bindemittel in hoher Verdünnung zu verwenden, z.B. mit einem Feststoffgehalt von maximal 10 Gew.-%.

Es folgen Beispiele zur Erläuterung der Erfindung, die diese aber in keiner Weise einschränken sollen.

### Bespiel 1 :

### Herstellung des Ansatzes

11,85g MTEOS (6,65 mmol), 5,22g MPTS (21,02 mmol), 0,445g VTES (0,23 mmol) und 5,72g TEOS (27,47 mmol) werden gemischt und unter dem Rühren mit einem Gemisch aus 0,38g 37% HCl und 2,34g Wasser (0,13 mol) versetzt. Sobald der Umschlagpunkt des Sols innerhalb von 1-2 Minuten erreicht wird, werden 10,04g TPT (Tetraisopropyltitanat) (35,3 mol) mit einem Schuss ins Sol zugefügt. Nach Rühren über Nacht werden 2,54g Wasser (0,141 mol) in das Sol zugetropft und es wird für 30 min weitergerührt. Danach wird ein Acrylatgemisch aus 8,26g Diurethandimethacrylat, 2,3g Diethylenglykoldimethacrylat und 10,48g Bisphenol A-diacrylat zugegeben. Anschließend werden 0,56g Trigono^{®} 121 als thermischer Starter zugefügt.

### Herstellung des Formkörpers

Das zubereitete Sol wird mit "Proppants", d. h. Sandkörner, die bei der Erdölförderung, insbesondere der Off-Shore-Förderung, eingesetzt werden, in einer 20ml-Spritze homogen verteilt und unter Autoklaven-Bedingungen von 70° C bei 70 bar für 16 Stunden ausgehärtet.

Die Druckfestigkeit des hergestellten Formköpers war 4,5 MPa.

### Beispiel 2:

11,85g MTEOS (6,65 mmol), 5,22g MPTS (21,02 mmol), 0,445g VTES (0,23 mmol), 5,72g TEOS (27,47 mmol) und 8,4g Poly(diethoxysilan) (20,5-21,5 % Si) werden gemischt und unter Rühren mit einem Gemisch aus 0,38g 37% HCl und 2,91g Wasser (0,162 mol) versetzt. Sobald der Umschlagpunkt des Sols innerhalb von 1-2 Minuten erreicht wird, werden 10,04g TPT (35,3 mmol) mit einem Schuss in das Sol gegeben. Nach Rühren über Nacht werden 3,2g Wasser (0,178 mol) in das Sol zugetropft und es wird für 30 min weitergerührt. Danach wird ein Acrylatgemisch aus 8,26g Diurethandimethacrylat, 2,3g Diethylenglykoldimethacrylat und 10,48g Bisphenol A-diacrylat zugegeben. Anschließend werden 0,32g Trigonox^{®} 121 als thermischer Starter zugefügt. Ein Formkörper wird wie in Beispiel 1

### hergestellt.

Die Druckfestigkeit des hergestellten Formköpers war 4,3 MPa.

### Beispiel 3:

11,85g MTEOS (6,65 mmol), 5,22g MPTS (21,02 mmol), 0,445g VTES (0,23 mmol), 5,72g TEOS (27,47 mmol) und 3,77g Polydimethylsiloxan mit Hydroxyendgruppen (Molekulargewicht von 400-700g/mol) werden gemischt und unter dem Rühren mit einem Gemisch aus 0,38g 37% HCl und 2,34g Wasser (0,13 mol) versetzt. Sobald der Umschlagpunkt des Sols innerhalb von 1-2 Minuten erreicht wird, werden 10,04g TPT (35,3 mmol) mit einem Schuss in das Sol zugefügt. Nach Rühren über Nacht wurden 2,54g Wasser (0,141 mol) in das Sol zugetropft und es wurde 30 Minuten weitergerührt. Danach wurde ein Acrylatgemisch aus 8,26g Diurethandimethacrylat, 2,3g Diethylenglykoldimethacrylat und 10,48g Bisphenol A-diacrylat zugegeben. Anschließend wurden 0,32g Trigonox 121 als thermischer Starter zugefügt. Der Formkörper wurde wie in Beispiel 1 hergestellt.

Die Druckfestigkeit des hergestellten Formköpers war 4,8 MPa.

### Beispiel 4:

11,85g MTEOS (6,65 mmol), 5,22g MPTS (21,02 mmol), 0,445g VTES (0,23 mmol), 5,72g TEOS (27,47 mmol) und 3,77g Polydimethylsiloxan mit Hydroxyendgruppen (Molekulargewicht von 1500-2000g/mol) wurden gemischt und unter dem Rühren mit einem Gemisch aus 0,38g 37% HCl und 2,34g Wasser (0,13 mol) versetzt. 10,04g TPT (35,3 mmol) wurden 1-2 Minuten nach der Zugabe von HCl und Wasser in das Sol mit einem Schuss zugefügt. Nach Rühren über Nacht wurden 2,54g Wasser (0,141 mol) in das Sol zugetropft und es wurde 30 Minuten weitergerührt. Danach wurde ein Acrylatgemisch aus 8,26g Diurethandimethacrylat, 2,3g Diethylenglykoldimethacrylat und 10,48g Bisphenol A-diacrylat zugegeben. Anschließend wurden 0,32g Trigonox^{®} 121 als thermischer Starter zugefügt. Der Formkörper wurde wie in Beispiel 1 hergestellt.

Die Druckfestigkeit des hergestellten Formköpers war 5,9 MPa.

### Beispiel 5:

11,33g MPTS (45,6 mmol) und 5,65g Polydimethylsiloxan mit Hydroxyendgruppen (Molekulargewicht von 400-700g/mol) wurden gemischt und unter dem Rühren mit einem Gemisch aus 0,122g 37% HCl und 1,18g Wasser (66,6 mmol) versetzt. 10,04g TPT (35,3 mmol) wurden 1 Minute nach der Zugabe von HCl und Wasser in das Sol mit einem Schuss zugefügt und es wurde für 2 Stunden weitergerührt. Danach wurden 1,53g Wasser (85 mmol) zugetropft. Nach Rühren über Nacht wurde ein Acrylatgemisch aus 8,26g Diurethandimethacrylat, 2,3g Diethylenglykoldimethacrylat und 10,48g Bisphenol A-diacrylat zugegeben. Anschließend wurden 0,3g Trigonox^{®} 121 als thermischer Starter zugefügt. Der Formkörper wurde wie in Beispiel 1 hergestellt.

Die Druckfestigkeit des hergestellten Formköpers war 8,2 MPa.

### Beispiel 6:

11,33g MPTS (45,6 mmol) und 3,76g Polydimethylsiloxan mit Hydroxyendgruppen (Molekulargewicht von 1500-2000g/mol) wurden gemischt und unter dem Rühren mit einem Gemisch aus 0,136g 37% HCl und 1,45g Wasser (80,6 mmol) versetzt. 13,4g TPT (47, 1 mmol) wurden 1 Minute nach der Zugabe von HCl und Wasser in das Sol mit einem Schuss zugefügt und es wurde 2 Stunden weitergerührt. Danach wurden 1,88g (0,105 mol) Wasser zugetropft. Nach Rühren über Nacht wurde ein Acrylatgemisch aus 8,26g Diurethandimethacrylat, 2,3g Diethylenglykoldimethacrylat und 10,48g Bisphenol A-diacrylat zugegeben. Anschließend wurden 0,3g Trigonox^{®} 121 als thermischer Starter zugefügt. Der Formkörper wurde wie in Beispiel 1 hergestellt.

Die Druckfestigkeit des hergestellten Formkörpers wurde war 11 MPa.

Die Wirkung des erfindungsgemäßen Bindemittels zeigte sich in aller Deutlichkeit im Autoklaven-Versuch. Während gebundene Formkörper mit einem Vergleichsbindemittel, das nicht den beschriebenen Einbau des Metalls oder Bors aufweist, bei einem 12-stündigen Versuch entweder drastisch an Festigkeit verlieren oder zerfallen, behält das titanhaltige Bindemittel weitestgehend seine Ausgangsfestigkeit bei, die je nach Bindemittel, Menge und Porosität zwischen fünf und 12 MPa betragen kann.

## Patentansprüche

1. Verfahren zur Herstellung eines Bindemittels umfassend ein Heterokondensat aus Siliziumverbindungen und Metall- oder Borverbindungen, bei dem
A) mindestens eine hydrolysierbare Siliziumverbindung mit einer nicht hydrolysierbaren polymerisierbaren Gruppe als Si-Komponente mit Wasser unter Bildung eines Hydrolyseprodukts vermischt wird und dann
B) mindestens eine Metall- oder Borverbindung, wobei das Metall ausgewählt ist aus Al, Ga, In, Tl, Ge, Ga, Sn, Pb, Ti, Zr, Hf, Sc, Y und La, zum Hydrolyseprodukt zu einem Zeitpunkt zugegeben wird, der innerhalb von 15 s bis 15 min nach der Vermischung der hydrolysierbaren Siliziumverbindungen mit dem Wasser liegt.

2. Verfahren nach Anspruch 1, **dadurch gekennzeichnet, dass** der Zeitpunkt der Zugabe der Metall- oder Borverbindung in der Nähe des Umschlagpunkts liegt, bei dem die wässrige Phase und die organische Phase, die bei der Vermischung von der hydrolysierbaren Siliziumverbindung mit dem Wasser gebildet werden, in eine Phase übergehen.

3. Verfahren nach Anspruch 1 oder Anspruch 2, **dadurch gekennzeichnet, dass** Si-Komponente und die Metall- oder Borverbindung, die als Ausgangsmaterialien eingesetzt werden, lösungsmittelfrei zugegeben werden.

4. Verfahren nach einem der Ansprüche 1 bis 3, **dadurch gekennzeichnet, dass** die Si-Komponente zusätzlich mindestens eine hydrolysierbare Siliziumverbindung ausgewählt aus einem hydrolysierbaren Silan mit mindestens einer nicht hydrolysierbaren organischen Gruppe und einem hydrolysierbaren Silan ohne nicht hydrolysierbare Gruppen umfasst.

5. Verfahren nach einem der Ansprüche 1 bis 4, **dadurch gekennzeichnet, dass** mindestens ein Polysiloxan mit mindestens einer reaktiven Gruppe zugegeben wird, wobei das Polysiloxan bevorzugt mindestens eine Silanolgruppe oder eine Alkoxygruppe als reaktive Gruppe aufweist.

6. Verfahren nach einem der Ansprüche 1 bis 5, **dadurch gekennzeichnet, dass** dem Bindemittel ein organisches Monomer, Oligomer oder Polymer zugegeben wird, die mindestens eine funktionelle Gruppe enthalten, die mit der polymerisierbaren Gruppe der hydrolysierbaren Siliziumverbindung reaktiv ist.

7. Verfahren nach einem der Ansprüche 1 bis 6, **dadurch gekennzeichnet, dass** die Metall- oder Borverbindung eine Verbindung von B, Al, Sn, Ti und Zr ist, wobei Ti bevorzugt ist, und bevorzugt ein Titan-, Zirconium- oder Aluminiumalkoxid ist.

8. Verfahren nach einem der Ansprüche 1 bis 7, **dadurch gekennzeichnet, dass** das Molverhältnis von Si-Atomen zu Metall- und Boratomen im Bindemittel im Bereich von 10:1 bis 1:3 liegt.

9. Bindemittel umfassend ein Heterokondensat, das ein Metallo- oder Borosiloxan ist und Heteroatomeinheiten von Heteroatomen ausgewählt aus B, Al, Ga, In, Tl, Ge, Ga, Sn, Pb, Ti, Zr, Hf, Sc, Y und La, die über Sauerstoffbrücken in das Siloxangerüst eingebaut sind, und Siloxaneinheiten, bei denen das Siliziumatom eine nicht hydrolysierbare organische polymerisierbare Gruppe aufweist, enthält.

10. Bindemittel nach Anspruch 9, erhältlich nach einem Verfahren der Ansprüche 1 bis 8.

11. Bindemittel nach einem der Ansprüche 9 oder 10, **dadurch gekennzeichnet, dass** das Bindemittel partikelfrei ist.

12. Bindemittel nach einem der Ansprüche 9 bis 11, **dadurch gekennzeichnet, dass** es das Heterokondensat als anorganische Komponente und organische Monomere, Oligomere oder Polymere als organische Komponente umfasst, so dass nach der Härtung ein anorganisch-organisches Komposit als interpenetrierendes polymeres Netzwerk gebildet wird.

13. Bindemittel nach Anspruch 12, **dadurch gekennzeichnet, dass** das Gewichtsverhältnis von Heterokondensat und organischer Komponente, bezogen auf das gehärtete Bindemittel, 95:5 bis 5:95 beträgt.

14. Verwendung des Bindemittels nach einem der Ansprüche 9 bis 13 zur Verfestigung von geologischen Formationen, zur Verfestigung von anorganischen Granulaten, zur Verfestigung von Granulat-Schüttungen, die bei der Öl- und Gasförderung zum Freihalten der Quellen eingesetzt werden, oder zur Behandlung von kontaminiertem Sand.

15. Verwendung nach Anspruch 14, bei dem das Bindemittel mit einer Schüttung von anorganischem Granulat oder der geologischen Formation gemischt und thermisch gehärtet wird, wobei das Bindemittel bevorzugt zur Mischung in die Schüttung oder Formation infiltriert wird.

16. Formkörper umfassend eine Mischung aus einem gehärteten Bindemittel nach einem der Ansprüche 9 bis 13 und einem teilchen- oder faserartigen Material wie einem anorganischen Granulat.

## Claims

1. Process for the preparation of a binder comprising a heterocondensate of silicon compounds and metal compounds or boron compounds, in which
A) at least one hydrolysable silicon compound having a non-hydrolysable polymerizable group, as a Si component, is mixed with water to form a hydrolysis product and then
B) at least one metal compound or boron compound, the metal being selected from Al, Ga, In, Tl, Ge, Ga, Sn, Pb, Ti, Zr, Hf, Sc, Y and La, is added to the hydrolysis product at a time which is within 15 s to 15 min after the mixing of the hydrolysable silicon compounds with the water.

2. Process according to Claim 1, **characterized in that** the time of addition of the metal compound or boron compound is close to the transition point at which the aqueous phase and the organic phase which are formed on mixing of the hydrolysable silicon compounds with the water become one phase.

3. Process according to Claim 1 or Claim 2, **characterized in that** the Si component and the metal compound or boron compound, which are used as starting materials, are added in a solvent-free state.

4. Process according to any of Claims 1 to 3, **characterized in that** the Si component additionally comprises at least one hydrolysable silicon compound selected from a hydrolysable silane having at least one non-hydrolysable organic group and a hydrolysable silane without non-hydrolysable groups.

5. Process according to any of Claims 1 to 4, **characterized in that** at least one polysiloxane having at least one reactive group is added, wherein the polysiloxane has preferably at least one silanol group or one alkoxy group as a reactive group.

6. Process according to any of Claims 1 to 5, **characterized in that** an organic monomer, oligomer or polymer which contains at least one functional group which is reactive with the polymerizable group of the hydrolysable silicon compound is added to the binder.

7. Process according to any of Claims 1 to 6, **characterized in that** the metal compound or boron compound is a compound of B, Al, Sn, Ti and Zr, Ti being preferred, and preferably is a titanium, zirconium or aluminium alkoxide.

8. Process according to any of Claims 1 to 7, **characterized in that** the molar ratio of Si atoms to metal and boron atoms in the binder is in the range of 10:1 to 1:3.

9. Binder comprising a heterocondensate which is a metallo- or borosiloxane and contains heteroatom units of heteroatoms selected from B, Al, Ga, In, TI, Ge, Ga, Sn, Pb, Ti, Zr, Hf, Sc, Y and La, which are incorporated into the siloxane framework via oxygen bridges, and siloxane units in which the silicon atom has a non-hydrolysable organic polymerizable group.

10. Binder according to Claim 9, obtainable by a process according to Claims 1 to 8.

11. Binder according to Claim 9 or Claim 10, **characterized in that** the binder is particle-free.

12. Binder according to any of Claims 9 to 11, **characterized in that** it comprises the heterocondensate as an inorganic component and organic monomers, oligomers or polymers as an organic component, so that an inorganic-organic composite is formed as an interpenetrating polymeric network after curing.

13. Binder according to Claim 12, **characterized in that** the weight ratio of heterocondensate and organic component, based on the cured binder, is 95:5 to 5:95.

14. Use of the binder according to any of Claims 9 to 13 for consolidating geological formations, for consolidating inorganic granules, for consolidating beds of granules which are used in oil and gas production for keeping the wells clear, or for treating contaminated sand.

15. Use according to Claim 14, in which the binder is mixed with a bed of inorganic granules or the geological formation and is thermally cured, wherein it is preferred that the binder is infiltrated into the bed or formation for mixing.

16. Moulding comprising a mixture of a cured binder according to any of Claims 9 to 13 and a particulate or fibrous material, such as inorganic granules.

## Revendications

1. Procédé pour la préparation d'un liant comprenant un produit d'hétérocondensation de composés siliciés et de composés métalliques ou de bore, dans lequel
A) on mélange avec de l'eau au moins un composé silicié hydrolysable comportant un groupe polymérisable non hydrolysable, en tant que composant silicié, avec formation d'un produit d'hydrolyse et ensuite
B) on ajoute au produit d'hydrolyse au moins un composé métallique ou de bore, le métal étant choisi parmi Al, Ga, In, Tl, Ge, Ga, Sn, Pb, Ti, Zr, Hf, Sc, Y et La, à un moment qui se situe dans l'intervalle de 15 secondes à 15 minutes après le mélange des composés siliciés hydrolysables avec l'eau.

2. Procédé selon la revendication 1, **caractérisé en ce que** le moment de l'addition du composé métallique ou de bore se situe au voisinage du point de transition où la phase aqueuse et la phase organique, qui sont formées lors du mélange du composé silicié hydrolysable avec l'eau, se transforment en une phase.

3. Procédé selon la revendication 1 ou la revendication 2, **caractérisé en ce que** le composant silicié et le composé métallique ou de bore, qui sont utilisés comme produits de départ, sont ajoutés sans solvant.

4. Procédé selon l'une quelconque des revendications 1 à 3, **caractérisé en ce que** le composant silicié comprend en outre au moins un composé silicié hydrolysable choisi parmi un silane hydrolysable comportant au moins un groupe organique non hydrolysable et un silane hydrolysable sans groupes non hydrolysables.

5. Procédé selon l'une quelconque des revendications 1 à 4, **caractérisé en ce qu'**on ajoute au moins un polysiloxane comportant au moins un groupe réactif, le polysiloxane comportant comme groupe réactif au moins un groupe silanol ou un groupe alcoxy.

6. Procédé selon l'une quelconque des revendications 1 à 5, **caractérisé en ce qu'**on ajoute au liant un monomère, oligomère ou polymère organique, qui contiennent au moins un groupe fonctionnel qui est réactif avec le groupe polymérisable du composé silicié hydrolysable.

7. Procédé selon l'une quelconque des revendications 1 à 6, **caractérisé en ce que** le composé métallique ou de bore est un composé de B, Al, Sn, Ti et Zr, Ti étant préféré, et est de préférence un alcoolate de titane, zirconium ou aluminium.

8. Procédé selon l'une quelconque des revendications 1 à 7, **caractérisé en ce que** le rapport molaire des atomes de silicium aux atomes métalliques et de bore dans le liant se situe dans la plage de 10:1 à 1:3.

9. Liant comprenant un produit d'hétérocondensation qui est un métallo- ou borosiloxane et contient des unités à hétéroatomes d'hétéroatomes choisis parmi B, Al, Ga, In, Tl, Ge, Ga, Sn, Pb, Ti, Zr, Hf, Sc, Y et La, qui sont incorporées par des ponts oxygène dans le squelette siloxane, et des unités siloxane dans lesquelles l'atome de silicium comporte un groupe organique polymérisable non hydrolysable.

10. Liant selon la revendication 9, pouvant être obtenu selon un procédé des revendications 1 à 8.

11. Liant selon la revendication 9 ou 10, **caractérisé en ce que** le liant est exempt de particules.

12. Liant selon l'une quelconque des revendications 9 à 11, **caractérisé en ce qu'**il comprend le produit d'hétérocondensation en tant que composant inorganique et des monomères, oligomères ou polymères organiques en tant que composant organique, de sorte qu'après le durcissement un composite inorganique-organique est formé sous forme de réseau polymère interpénétrant.

13. Liant selon la revendication 12, **caractérisé en ce que** le rapport pondéral du produit d'hétérocondensation et du composant organique vaut de 95:5 à 5:95, sur la base du liant durci.

14. Utilisation du liant selon l'une quelconque des revendications 9 à 13, pour la consolidation de formations géologiques, pour la consolidation de granulés inorganiques, pour la consolidation de lits de granulés, qui sont utilisés dans l'extraction du gaz et du pétrole pour le dégagement des sources, ou pour le traitement de sable contaminé.

15. Utilisation selon la revendication 14, dans laquelle le liant est mélangé avec un lit de produit granulé inorganique ou de la formation géologique et durci thermiquement, le liant étant pour le mélange de préférence infiltré dans le lit ou la formation.

16. Corps moulé, comprenant un mélange d'un liant durci selon l'une quelconque des revendications 9 à 13 et d'un matériau particulaire ou fibreux tel qu'un produit granulé inorganique.
